(19) Europäisches Patentamt
European Patent Office
Office européen des brevets

(11) **EP 4 586 149 A1**

(12) **EUROPEAN PATENT APPLICATION**

(43) Date of publication:
**16.07.2025 Bulletin 2025/29**

(21) Application number: **24305097.8**

(22) Date of filing: **15.01.2024**

(51) International Patent Classification (IPC):
**G06N 3/098** (2023.01)     **G06N 3/096** (2023.01)
**G06N 3/0464** (2023.01)     **G06N 3/084** (2023.01)
**G06N 5/045** (2023.01)

(52) Cooperative Patent Classification (CPC):
**G06N 3/098; G06N 3/0464; G06N 3/096;**
**G06V 10/82;** G06N 3/084; G06N 5/045

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **BULL SAS**
**78340 Les Clayes-Sous-Bois (FR)**

(72) Inventors:
• **GUEGAN-MARAT, Sophie**
  **38420 Revel (FR)**
• **PONOMAREV, Evgeniy**
  **1206 Geneve (CH)**

(74) Representative: **IPAZ**
**Bâtiment Platon**
**Parc Les Algorithmes**
**91190 Saint-Aubin (FR)**

(54) **PRIVACY-PRESERVING FEDERATED LEARNING METHOD, ASSOCIATED COMPUTER PROGRAM AND FRAMEWORK**

(57)     The invention concerns a method (20) for performing privacy-preserving federated learning, the method comprising the steps:
- training (22) an object detection model based on a central training dataset (12) to obtain a preliminary model (30);
- for each of N local nodes (8), training (24) a respective copy of the preliminary model based on a respective private training dataset (14), thereby obtaining a local model (32);
- computing (26) an average model (34) as an average of N intermediate models (38), each depending on a respective local model (32); and
- generating (28) a central model (36) based:
• on the preliminary model (30) and on an average output of the average model (34) based on a predetermined public dataset (10) as input; or
• on the average model (34) and a local output of each local model (32) based on the public dataset (10) as input.

Figure 1

## Description

## Field of the invention

The present invention relates to a computer-implemented method for performing privacy-preserving federated learning in the framework of object detection.

The invention further relates to a computer program and a framework.

The invention applies to the field of computer science, and more specifically to artificial intelligence for image processing.

## Background

Performing federated learning, that is to say collecting knowledge from various heterogeneous sources of data (hereinafter called "local data"), generally scattered across different geographical locations, and incorporating this knowledge into a central artificial intelligence model, is known to the person skilled in the art.

However, known methods for federated learning are not entirely satisfactory.

Indeed, such methods are generally unable to avoid data leakage when extracting knowledge from local data to teach the central artificial intelligence model. In this case, data leakage may result from either direct transfer of local data or indirect leakages, such as through sharing model parameters or gradients. In other words, such methods do not guarantee that the local data remain private, which may be a major concern in the case of, for instance, data that should always physically stay at customers' premises, such as patients' medical data.

Moreover, known methods for federated learning are not suitable for federated learning in the framework of object detection.

A purpose of the present invention is to overcome at least one of these drawbacks.

Another purpose of the invention is to provide a method suitable for privacy-preserving federated learning in the framework of object detection.

## Summary of the invention

To this end, the present invention concerns a method of the aforementioned type, comprising the following steps:

- training an object detection model based on a central training dataset to obtain a preliminary model;
- storing a copy of the preliminary model in each of N local nodes, N being an integer greater than or equal to 2;
- for each local node, training the respective preliminary model based on a respective private training dataset, thereby obtaining a local model;
- computing an average model as an average of N intermediate models, each intermediate model depending on a respective local model; and
- generating a central model, stored in a central node distinct from the local nodes, based:

    • on the preliminary model and on an average output of the average model based on a predetermined public dataset as input, each intermediate model being the respective local model; or
    • on the average model and a local output of each local model based on the public dataset as input, each intermediate model being a result of optimizing the preliminary model based on the local output of the respective local model.

Indeed, since each private training dataset is stored in a respective local node, and since only the outputs of the local models are used to generate the central node, privacy of the data contained in each private training dataset is preserved. Moreover, using such outputs enables an efficient knowledge transfer to the central node, and, consequently, allows to obtain a central model that is reliable.

Furthermore, in the case where each intermediate model is the respective local model, the data used to generate the central model are output by a single average model. Therefore, performing knowledge distillation based on the public dataset ensures that the obtained central model is leakage-proof even if the retrieved information (such as weights) of the local models can be vulnerable to data leakage.

Moreover, in the case where each intermediate model is a result of optimizing the preliminary model based on the local output of the respective local model, knowledge distillation is performed directly at each local node. This approach ensures high level of privacy (i.e., diminished risk of data leakage), since local models always remain at respective local nodes, while benefiting from model averaging.

According to other advantageous aspects of the invention, the method includes one or several of the following features, taken alone or in any technically possible combination:

the method further includes storing a copy of the preliminary model in the central node,

the step of generating the central model including:

- determining the average output of the average model based on the public dataset as input;
- modifying parameters of the preliminary model stored in the central node to minimize a difference between:

    • the determined average output; and
    • a preliminary output of the preliminary model based on the public dataset as input,

thereby obtaining the central model;

for each image of the public dataset, the average output, respectively the preliminary output, includes:

- at least one corresponding prediction vector, each prediction vector defining a respective bounding box;
- at least one corresponding attention map representative of a contribution of each section of the image in a detection, by the average model, respectively by the preliminary model, of one or more object(s) in the image;

for each image of the public dataset, computing each attention map includes implementing an Eigen-CAM algorithm or a Grad-CAM algorithm;

each prediction vector includes:

- an objectness probability representative of a probability that an object is actually present in the corresponding bounding box;
- a class probability representative of a probability that an object present in the corresponding bounding box belongs to a given class among a predetermined set of classes;

and implementing the Grad-CAM algorithm includes, for each image of the public dataset:

- selecting the corresponding prediction vectors that have an objectness probability that is greater than a predetermined objectness threshold;
- computing a gradient, with respect to parameters of a last convolutional layer of the average model, respectively the preliminary model, of a target function defined as:

$$T = \sum_{i=1}^{i=m} l_i$$

where:

- T is the target function;
- m is the number of selected prediction vectors having an objectness probability greater than the predetermined objectness threshold; and
- $l_i$ is a scalar associated with the $i^{th}$ selected prediction vector and equal to a result of multiplying the corresponding objectness probability with the highest corresponding class probability;

- for each activation map of the average model, respectively the preliminary model, computing a

corresponding weight as:

$$\alpha_k = \frac{1}{Z} \sum_i \sum_j \frac{\partial T}{\partial A_{ij}^k}$$

where

- $\alpha_k$ is the weight associated with the $k^{th}$ activation map;
- Z is the number of pixels of the $k^{th}$ activation map;
- summation over i, j corresponds to global average pooling over the width and height of the $k^{th}$ activation map; and
- $A_{ij}^k$ is the pixel having coordinates (i,j) of the $k^{th}$ activation map;

- computing the attention map as:

$$A_{map} = ReLU\left(\sum_k \alpha_k A^k\right)$$

where

- $A_{map}$ is the attention map for said image of the public dataset; and
- ReLU is a rectified linear unit function;

implementing the Eigen-CAM algorithm includes, for each image of the public dataset:

- forward-propagating said image through the average model, respectively the preliminary model, up to a predetermined layer of the average model, respectively the preliminary model;
- factorizing an output of the predetermined layer using singular value decomposition to obtain at least one eigen vector;
- computing the corresponding attention map as a projection of the output of the predetermined layer on the first obtained eigenvector;

each of the average model and the preliminary model is a convolutional neural network;

the step of computing the average model includes:

- for each local model, determining the corresponding local output based on the public dataset as input;
- for each local node, modifying parameters of the preliminary model stored therein to minimize a difference between:

- the corresponding local output; and
- a preliminary output of said preliminary model based on the public dataset as input,

thereby obtaining the respective intermediate model;

- computing the average model as the average of the N obtained intermediate models;

the step of generating the central model including storing the computed average model in the central node to form the central model;

for each image of the public dataset, and for each local node, the associated local output, respectively the associated preliminary output, includes:

- at least one corresponding prediction vector, each prediction vector defining a respective bounding box;
- at least one corresponding attention map representative of a contribution of each section of the image in a detection, by the respective local model, respectively by the respective preliminary model, of one or more object(s) in the image;

for each image of the public dataset, computing each attention map includes implementing an Eigen-CAM algorithm or a Grad-CAM algorithm;

each prediction vector includes:

- an objectness probability representative of a probability that an object is actually present in the corresponding bounding box;
- a class probability representative of a probability that an object present in the corresponding bounding box belongs to a given class among a predetermined set of classes;

and, for each local node, implementing the Grad-CAM algorithm includes, for each image of the public dataset:

- selecting the corresponding prediction vectors that have an objectness probability that is greater than a predetermined objectness threshold;
- computing a gradient, with respect to parameters of a last convolutional layer of the respective local model, respectively the respective preliminary model, of a target function defined as:

$$ T = \sum_{i=1}^{i=m} l_i $$

where:

- $T$ is the target function;
- $m$ is the number of selected prediction vectors having an objectness probability greater than the predetermined objectness threshold; and
- $l_i$ is a scalar associated with the $i^{th}$ selected prediction vector and equal to a result of multiplying the corresponding objectness probability with the highest corresponding class probability;

- for each activation map of the respective local model, respectively the respective preliminary model, computing a corresponding weight as:

$$ \alpha_k = \frac{1}{Z} \sum_i \sum_j \frac{\partial T}{\partial A_{ij}^k} $$

where

- $\alpha_k$ is the weight associated with the $k^{th}$ activation map;
- $Z$ is the number of pixels of the $k^{th}$ activation map;
- summation over $i$, $j$ corresponds to global average pooling over the width and height of the $k^{th}$ activation map; and
- $A_{ij}^k$ is the pixel having coordinates $(i,j)$ of the $k^{th}$ activation map;

- computing the attention map as:

$$ A_{map} = ReLU\left( \sum_k \alpha_k A^k \right) $$

where

- $A_{map}$ is the attention map for said image of the public dataset; and
- $ReLU$ is a rectified linear unit function;

for each local node, implementing the Eigen-CAM algorithm includes, for each image of the public dataset:

- forward-propagating said image through the respective local model, respectively the respective preliminary model, up to a predetermined layer of the respective local model, respectively the respective preliminary model;
- factorizing an output of the predetermined layer using singular value decomposition to obtain at least one eigen vector;
- computing the corresponding attention map as a projection of the output of the predetermined layer on the first obtained eigenvector;

for each local node, each of the respective local model, respectively the respective preliminary model, is a convolutional neural network.

According to another aspect of the same invention, it is proposed a computer program comprising instructions, which when executed by a computer, cause the computer to carry out the steps of the method as defined above.

The computer program may be in any programming language such as C, C++, JAVA, Python, etc.

The computer program may be in machine language.

The computer program may be stored, in a non-transient memory, such as a USB stick, a flash memory, a hard-disc, a processor, a programmable electronic chop, etc.

The computer program may be stored in a computerized device such as a smartphone, a tablet, a computer, a server, etc.

According to another aspect of the same invention, it is proposed a framework for performing privacy-preserving federated learning for object detection, the framework comprising:

- N local nodes, N being an integer greater than or equal to 2, each local node being configured to:

  • store a copy of a preliminary model, the preliminary model being a result of training an object detection model based on a central training dataset;
  • train the respective preliminary model based on a respective private training dataset, thereby obtaining a local model;

- a node configured to compute an average model as an average of N intermediate models, each intermediate model depending on a respective local model; and
- a central node, distinct from the local nodes, and configured to store a central model generated based:

  • on the preliminary model and on an average output of the average model based on a predetermined public dataset as input, each intermediate model being the respective local model; or
  • on the average model and a local output of each local model based on the public dataset as input, each intermediate model being a result of optimizing the preliminary model based on the local output of the respective local model.

Each of the central node and the local nodes may be a personal device such as a smartphone, a tablet, a smartwatch, a computer, any wearable electronic device, etc.

Each of the central node and the local nodes according to the invention may execute one or several applications to carry out the method according to the invention.

Each of the central node and the local nodes may be loaded with, and configured to execute, the computer program according to the invention.

## Brief description of the drawings

Other advantages and characteristics will become apparent on examination of the detailed description of an embodiment which is in no way limitative, and the attached figures, where:

Figure 1 is a schematic representation of a first embodiment of a framework according to the invention;

Figure 2 is a schematic representation of a second embodiment of a framework according to the invention; and

Figure 3 is a flowchart of a method implemented by each of the frameworks of figures 1 and 2.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures retain the same reference.

## Detailed description

### First embodiment

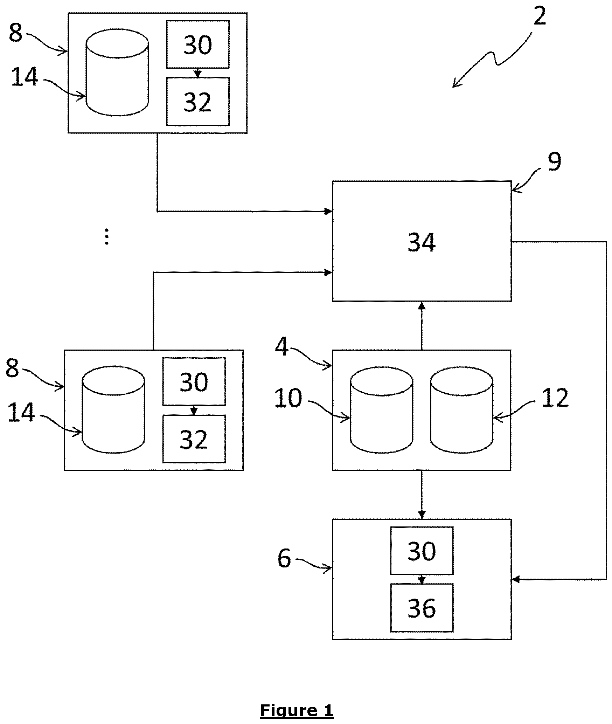

A framework 2 according to a first embodiment of the invention is shown on figure 1.

The framework 2 is designed to perform privacy-preserving federated learning for object detection.

The framework 2 includes a public server 4, a central node 6, and N local nodes 8, N being an integer greater than or equal to 2.

The framework 2 preferably further includes a secure node 9.

The public server 4 is configured to store a public dataset 10. Moreover, the public server 4 is configured so that the central node 6 and the secure node 9 can access and read the public dataset 10.

The public dataset 10 includes at least one predetermined image.

Preferably, the public server 4 is also configured to store a central training dataset 12. In this case, the public server 4 is configured so that the central training dataset 12 can be accessed and read at least by the central node 6.

The central training dataset 12 is suitable for the training of an object detection model. For instance, the central training dataset 12 includes a set of predetermined images, each image being annotated to define, for each object shown in said image, respective bounding box and class.

Alternatively, the central training dataset 12 is stored in the central node 6.

Furthermore, each local node 8 is configured to store a respective private training dataset 14.

Each private training dataset 14 is suitable for the training of an object detection model. For instance, each private training dataset 14 includes a set of predetermined images, each image being annotated to define, for each object shown in said image, respective bounding box and class.

For instance, each private training dataset 14 is representative of data collected from one or more source(s) associated with the respective local node 8.

Advantageously, each private training dataset 14 can only be read by the respective local node 8. This feature is advantageous, as it prevents data leakage, thereby enhancing privacy.

Preferably, the private training datasets 14 differ from one another.

Advantageously, the secure node 9 is configured to meet a set of predetermined data security requirements, especially secure communication between said secure node 9 and each local node 8. This feature is advantageous, as it also prevents data leakage, thereby enhancing privacy.

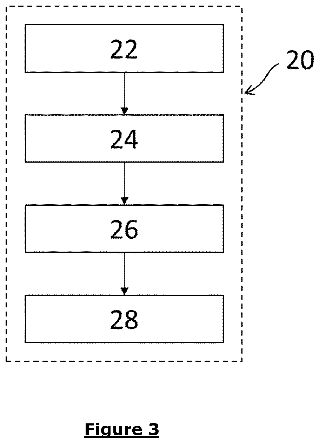

The remaining features of the framework 2 will be better understood through the description of the operation of the framework 2, provided below with reference to figures 1 and 3.

The framework 2 is configured to perform a method 20, shown on figure 3.

The method 20 includes an initial training step 22, a local training step 24, an averaging step 26 and a central model generation step 28.

Initial training step 22

During the initial training step 22, an object detection model (also called "computer vision model") is trained to obtain a preliminary model 30 as a result of the training.

For instance, the object detection model is a convolutional neural network. The object detection model may also be a vision transformer, or any other object detection model known to the person skilled in the art.

More specifically, the object detection model is trained based on the central training dataset 12.

Preferably, such training is performed at the central node 6.

Moreover, once the preliminary model 30 is obtained, a copy of the preliminary model 30 is stored in the central node 6 and in each local node 8.

Local training step 24

Then, during the local training step 24, the preliminary model 30 stored in each local node 8 is trained based on the respective private training dataset 14, resulting, for each local node 8, in a respective local model 32.

Averaging step 26

Then, during the averaging step 26, the secure node 9 computes an average model 34 based on the local models 32. More precisely, the secure node 9 computes the average model 34 as an average of N intermediate models, each intermediate model depending on a respective local model 32.

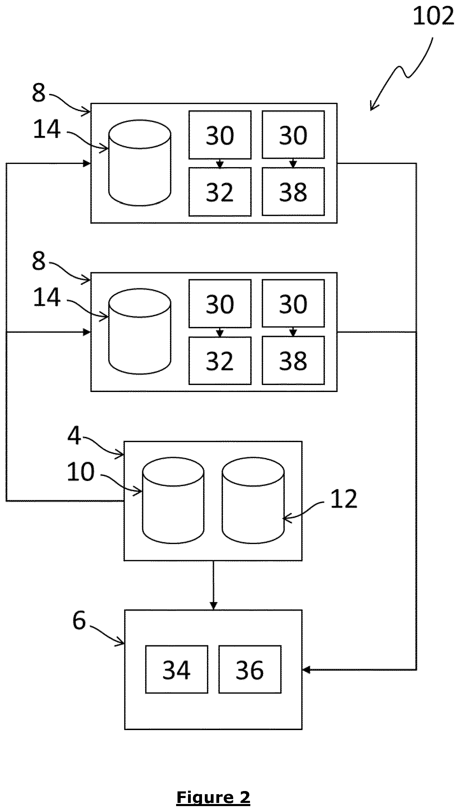

In the framework 2 of figure 1, each intermediate model is actually the respective local model 32. Nonetheless, as will be shown in relation to figure 2, each intermediate model may be different from the respective local model 32.

Preferably, the secure node 9 computes the average model 34 so that the value of each weight of the average model 34 is equal to an average of the values of the corresponding weights in each local model 32.

Such computation implies that an architecture chosen for the average model 34 is the same as the architecture of the local models 32, and, consequently, of the preliminary model 30.

Alternatively, other techniques may be used to compute the average model 34 based on the local models 32, such as weighted average or loss weighted average.

For instance, to perform the weighted average, the local node 9 is configured to assign a weighting coefficient to each of the local models 32 based on the size of the respective private training datasets 14. For instance, if the private training dataset 14 of a first local node 8 includes twice as many data as the private training dataset 14 of a second local node 8, then the weighting coefficient assigned to the first local node 8 is double the weighting coefficient assigned to the second local node 8.

For instance, to perform the loss weighted average, the local node 9 is configured to assign a weighting coefficient to each of the local models 32 based on the respective loss. In this case, the lower the loss of a local model 32 (i.e., the higher the confidence in the predictions of said local model 32), the higher the assigned weighting coefficient.

Then, the secure node 9 stores the computed average model 34. Alternatively, the average model 34 may be stored in the central node 6.

Alternatively, in the case of the absence of the secure node 9 (for instance in the case of less restrictive privacy constraints), the weights of each local model 32 are directly transferred from the local nodes 8 to the central node 6. In this case, computation of the average model 34 is performed by the central node 6, based on each local model 32.

Central model generation step 28

Then, during the central model generation step 28, a central model 36 is generated and stored in the central node 6. More precisely, the central model 36 is generated based on the preliminary model 30 and on an average output of the average model 34.

In this case, the average output is defined as a result of processing the public dataset 10 by the average model 34.

Preferably, for each image of the public dataset 10, the secure node 9 implements the average model 34 to:

- determine at least one corresponding prediction vector, each prediction vector defining a respective bounding box; and
- compute at least one attention map corresponding to said image, each attention map being representative of a contribution of each section of the image in a detection of one or more object(s) in the image by the average model 34.

Consequently, for each image of the public dataset 10, the average output includes each determined prediction vector and each computed attention map.

For instance, each prediction vector is an output of the average model 36, an output of a predetermined layer of the average model 36, or even a result of applying a predetermined function to an output of one or more predetermined layer(s) of the average model 36.

Preferably, each prediction vector includes coordinates of the respective bounding box, an objectness probability $P_{obj}$, and class probabilities $P_{CL1}$, $P_{CL2}$, ..., $P_{CLn}$.

Objectness probability is representative of a probability that an object is actually present in the corresponding bounding box.

Furthermore, class probability is representative of a probability that an object present in the bounding box belongs to a given class among a predetermined set of classes.

Preferably, for each image of the public dataset 10, the secure node 9 computes each corresponding attention map by implementing an Eigen-CAM algorithm or a Grad-CAM algorithm.

More precisely, in the case where the secure node 9 is configured to implement the Grad-CAM algorithm, then, for any given image of the public dataset 10, in order to compute the corresponding attention map(s), the secure node 9 selects the corresponding prediction vectors that have an objectness probability $P_{obj}$ that is greater than a predetermined objectness threshold $P_{min}$.

Then, the secure node 9 computes a gradient of a target function T, with respect to parameters of a last convolutional layer of the average model 34.

The target function T is defined as:

$$T = \sum_{i=1}^{i=m} l_i$$

where:

- m is the number of selected prediction vectors, *i.e.*, the number of prediction vectors that fulfill the aforementioned objectness probability requirement (*i.e.*, $P_{obj} \geq P_{min}$); and
- $l_i$ is a scalar associated with the $i^{th}$ selected prediction vector, and equal to a result of multiplying the objectness probability $P_{obj}$ of said selected prediction vector with the highest corresponding class probability $P_{CL1}$, $P_{CL2}$, ..., $P_{CLn}$.

Then, the secure node 9 computes a weight for each activation map of the average model 34 as:

$$a_k = \frac{1}{Z} \sum_i \sum_j \frac{\partial T}{\partial A_{ij}^k}$$

where:

- $\alpha_k$ is the weight associated with the $k^{th}$ activation map of the average model 34;
- Z is the number of pixels of the $k^{th}$ activation map;
- summation over i, j corresponds to global average pooling over the width and height of the $k^{th}$ activation map; and
- $A_{ij}^k$ is the pixel having coordinates (i,j) of the $k^{th}$ activation map.

By "$k^{th}$ activation map of a computer vision model", it is meant, in the context of the present invention, a 2-dimensional map obtained by forward propagation of an input image throughout the computer vision model up to the $k^{th}$ layer.

It is easily understood, by the person skilled in the art, that the weight $a_k$ is distinct from the aforementioned weights of the models 32, 34.

Then, the secure node 9 computes the attention map as:

$$A_{map} = ReLU\left(\sum_k a_k A^k\right)$$

where:

- $A_{map}$ is the attention map for said image of the public dataset 10; and
- ReLU is a rectified linear unit function.

Alternatively, in the case where the secure node 9 is configured to implement the Eigen-CAM algorithm, then, for any given image of the public dataset 10, in order to compute the corresponding attention map(s), the secure node 9 forward-propagates said image through the average model 34 up to a layer of interest M. Then, the secure node 9 further factorizes an output of layer M using singular value decomposition to obtain eigen vectors and eigen values.

In this case, the average model 34 is preferably a convolutional neural network. More precisely, the average model 34 is used in inference mode to generate a feature map corresponding to the layer of interest M, which is then further factorized with singular value decomposition.

Then, the secure node 9 computes the corresponding attention map as a projection of the output layer M on the first eigenvector.

Then, the average output determined by the secure node 9 is transferred to the central node 6 for processing.

In the case where the average model 34 is stored in the central node 6, the aforementioned computational phases of central model generation step 28 that implement the average model 36 are performed by said central node 6 rather than by the secure node 9.

Then, the central node 6 modifies parameters of the preliminary model 30 stored in said central node 6 to obtain the central model 36.

More precisely, to obtain the central model 36, the central node 6 modifies parameters of the preliminary model 30 stored therein to minimize a difference between:

- an output (also referred to as "preliminary output") of the preliminary model 30 stored in the central node 6, based on the public dataset 10 as input; and
- the average output received from the secure node 9.

To obtain the preliminary output, the central node 6 may implement any of the methods disclosed above in relation to the secure node 9, such as an Eigen-CAM algorithm or a Grad-CAM algorithm. Consequently, for each image of the public dataset 10, the preliminary output also includes at least one prediction vector and at least one attention map.

More precisely, the central node 6 is configured to encourage pixels in the output of the preliminary model 30 to get activated inside the attention map of the average output received from the secure node 9 and to penalize their activation outside said attention map of the average output. In other words, the central model 36 is modified so as to encourage it to generate attention maps as close as possible to the ones of the average output received from the secure node 9.

Preferably, to obtain the central model 36, the central node 6 is configured to perform a gradient descent method.

**Second embodiment**

A second embodiment of a framework 102 according to the invention is shown on figure 2.

The framework 102 is also configured to perform the method 20 of figure 3.

The framework 102 of figure 2 differs from the framework 2 of figure 1 in that it does not include a secure node 9.

Furthermore, the execution, by the framework 102, of the local training step 24, the averaging step 26 and the central model generation step 28 differs from the execution of said steps by the framework 2.

Local training step 24

More precisely, during the local training step 24, for each local node 8, an additional preliminary model 30 is stored therein. The additional preliminary model 30 is not trained during the local training step 24.

Averaging step 26

Then, during the averaging step 26, each local node 8 determines a corresponding local output based on the public dataset 10 as input.

In this case, for each local node 8, the respective local output is defined as a result of processing the public dataset 10 by the respective local model 32.

Preferably, for each image of the public dataset 10, each local node 8 implements the respective local model 32 to:

- determine at least one corresponding prediction vector; and
- compute at least one attention map corresponding to said image.

Said prediction vectors and attention maps are similar to those described previously in relation to the framework 2, and may be obtained using similar techniques. In this case, said techniques are performed by each local node 8, by implementing the respective local model 32, rather than by the aforementioned secure node 9.

Consequently, for each image of the public dataset 10, the local output associated with each local node 8 includes each determined prediction vector and each computed attention map.

Then, each local node 8 modifies parameters of the additional preliminary model 30 stored therein to obtain the respective intermediate model 38.

More precisely, for each local node 8, said local node 8 modifies parameters of the additional preliminary model 30 stored therein to minimize a difference between:

- an output (also referred to as "preliminary output") of the additional preliminary model 30 stored in said local node 8, based on the public dataset 10 as input; and
- the respective local output,

in order to obtain the respective intermediate model 38.

Each local node 8 may implement any of the methods disclosed above in relation to the framework 2 of figure 1 in order to determine the corresponding preliminary output (such as an Eigen-CAM algorithm or a Grad-CAM algorithm). Consequently, for each image of the public dataset 10, the preliminary output associated with each local node 8 includes at least one prediction vector and at least one attention map.

Moreover, in order to achieve the aforementioned modification of the parameters of the additional preliminary model 30, each local node 8 may be configured to perform techniques similar to those described previously in relation to framework 2 of figure 1.

Central model generation step 28

Then, the intermediate model 38 determined by each local node 8 is transferred to the central node 6.

Then, the central node 6 computes the average model 34 based on the received intermediate models 38. Given that each intermediate model 38 depends on the respective local model 32, consequently, the central node 8 computes the average model 34 based on the local models 32 (in this case, and as mentioned previously, in the framework 102, each intermediate model 38 is different from the respective local model 32).

More precisely, the central node 6 computes the average model 34 as an average of the N intermediate models 38.

Preferably, the central node 6 computes the average model 34 so that the value of each weight of the average model 34 is equal to an average of the values of the corresponding weights in each intermediate model 38. Alternatively, other techniques may be used to compute the average model 34 based on the intermediate models 38, such as weighted average or loss weighted average.

Then, the central node 6 stores the computed average model 34 as the central model 36.

Of course, the invention is not limited to the examples detailed above.

**Claims**

1. A computer-implemented method (20) for performing privacy-preserving federated learning in the framework of object detection, the method comprising the following steps:

    - training (22) an object detection model based on a central training dataset (12) to obtain a preliminary model (30);
    - storing a copy of the preliminary model (30) in each of N local nodes (8), N being an integer greater than or equal to 2;
    - for each local node (8), training (24) the respective preliminary model based on a respective private training dataset (14), thereby obtaining a local model (32);
    - computing (26) an average model (34) as an average of N intermediate models (38), each intermediate model (38) depending on a respective local model (32); and
    - generating (28) a central model (36), stored in a central node (6) distinct from the local nodes (8), based:

        • on the preliminary model (30) and on an average output of the average model (34) based on a predetermined public dataset (10) as input, each intermediate model being the respective local model (32); or
        • on the average model (34) and a local output of each local model (32) based on the public dataset (10) as input, each intermediate model (38) being a result of optimizing the preliminary model (30) based on the local output of the respective local model (32).

2. The method according to claim 1, further including storing a copy of the preliminary model (30) in the central node (6),
the step of generating (28) the central model (36) including:

    - determining the average output of the average model (34) based on the public dataset (10) as input;
    - modifying parameters of the preliminary model (30) stored in the central node (6) to minimize a difference between:

        • the determined average output; and
        • a preliminary output of the preliminary model (30) based on the public dataset (10) as input,

thereby obtaining the central model (36).

3. The method according to claim 2, wherein, for each image of the public dataset (10), the average output, respectively the preliminary output, includes:

- at least one corresponding prediction vector, each prediction vector defining a respective bounding box;
- at least one corresponding attention map representative of a contribution of each section of the image in a detection, by the average model (34), respectively by the preliminary model (30), of one or more object(s) in the image.

4. The method according to claim 3, wherein, for each image of the public dataset, computing each attention map includes implementing an Eigen-CAM algorithm or a Grad-CAM algorithm.

5. The method according to claim 4, wherein each prediction vector includes:

- an objectness probability representative of a probability that an object is actually present in the corresponding bounding box;
- a class probability representative of a probability that an object present in the corresponding bounding box belongs to a given class among a predetermined set of classes;

and wherein implementing the Grad-CAM algorithm includes, for each image of the public dataset (10):

- selecting the corresponding prediction vectors that have an objectness probability that is greater than a predetermined objectness threshold;
- computing a gradient, with respect to parameters of a last convolutional layer of the average model (34), respectively the preliminary model (30), of a target function defined as:

$$ T = \sum_{i=1}^{i=m} l_i $$

where:

- T is the target function;
- m is the number of selected prediction vectors having an objectness probability greater than the predetermined objectness threshold; and
- $l_i$ is a scalar associated with the $i^{th}$ selected prediction vector and equal to a result of multiplying the corresponding objectness probability with the highest corresponding class probability;

- for each activation map of the average model (34), respectively the preliminary model (30), computing a corresponding weight as:

$$ a_k = \frac{1}{Z} \sum_i \sum_j \frac{\partial T}{\partial A_{ij}^k} $$

where

- $\alpha_k$ is the weight associated with the $k^{th}$ activation map;
- Z is the number of pixels of the $k^{th}$ activation map;
- summation over i, j corresponds to global average pooling over the width and height of the $k^{th}$ activation map; and
- $A_{ij}^k$ is the pixel having coordinates (i,j) of the $k^{th}$ activation map;

- computing the attention map as:

$$ A_{map} = ReLU\left( \sum_k a_k A^k \right) $$

where

- $A_{map}$ is the attention map for said image of the public dataset (10); and
- ReLU is a rectified linear unit function.

6. The method according to claim 4, wherein implementing the Eigen-CAM algorithm includes, for each image of the public dataset (10):

- forward-propagating said image through the average model (34), respectively the preliminary model (30), up to a predetermined layer of the average model (34), respectively the preliminary model (30);
- factorizing an output of the predetermined layer using singular value decomposition to obtain at least one eigen vector;
- computing the corresponding attention map as a projection of the output of the predetermined layer on the first obtained eigenvector.

7. The method according to claim 6, wherein each of the average model (34) and the preliminary model (30) is a convolutional neural network.

**8.** The method according to claim 1, wherein the step of computing (26) the average model (34) includes:

- for each local model (32), determining the corresponding local output based on the public dataset (10) as input;
- for each local node (8), modifying parameters of the preliminary model (30) stored therein to minimize a difference between:

• the corresponding local output; and
• a preliminary output of said preliminary model (30) based on the public dataset (10) as input,

thereby obtaining the respective intermediate model (38);
- computing the average model (34) as the average of the N obtained intermediate models (38);

the step of generating (26) the central model (36) including storing the computed average model (34) in the central node (6) to form the central model (36).

**9.** The method according to claim 8, wherein, for each image of the public dataset (10), and for each local node (8), the associated local output, respectively the associated preliminary output, includes:

- at least one corresponding prediction vector, each prediction vector defining a respective bounding box;
- at least one corresponding attention map representative of a contribution of each section of the image in a detection, by the respective local model (32), respectively by the respective preliminary model (30), of one or more object(s) in the image.

**10.** The method according to claim 9, wherein, for each image of the public dataset (10), computing each attention map includes implementing an Eigen-CAM algorithm or a Grad-CAM algorithm.

**11.** The method according to claim 10, wherein each prediction vector includes:

- an objectness probability representative of a probability that an object is actually present in the corresponding bounding box;
- a class probability representative of a probability that an object present in the corresponding bounding box belongs to a given class among a predetermined set of classes;

and wherein, for each local node (8), implementing the Grad-CAM algorithm includes, for each image of the public dataset (10):

- selecting the corresponding prediction vectors that have an objectness probability that is greater than a predetermined objectness threshold;
- computing a gradient, with respect to parameters of a last convolutional layer of the respective local model (32), respectively the respective preliminary model (30), of a target function defined as:

$$T = \sum_{i=1}^{i=m} I_i$$

where:

• T is the target function;
• m is the number of selected prediction vectors having an objectness probability greater than the predetermined objectness threshold; and
• $I_i$ is a scalar associated with the $i^{th}$ selected prediction vector and equal to a result of multiplying the corresponding objectness probability with the highest corresponding class probability;

- for each activation map of the respective local model (32), respectively the respective preliminary model (30), computing a corresponding weight as:

$$a_k = \frac{1}{Z} \sum_i \sum_j \frac{\partial T}{\partial A_{ij}^k}$$

where

• $\alpha_k$ is the weight associated with the $k^{th}$ activation map;
• Z is the number of pixels of the $k^{th}$ activation map;
• summation over i, j corresponds to global average pooling over the width and height of the $k^{th}$ activation map; and
• $A_{ij}^k$ is the pixel having coordinates (i,j) of the $k^{th}$ activation map;

- computing the attention map as:

$$A_{map} = ReLU\left(\sum_k a_k A^k\right)$$

where

- $A_{map}$ is the attention map for said image of the public dataset (10); and
- ReLU is a rectified linear unit function.

12. The method according to claim 10, wherein, for each local node (8), implementing the Eigen-CAM algorithm includes, for each image of the public dataset (10):

- forward-propagating said image through the respective local model (32), respectively the respective preliminary model (30), up to a predetermined layer of the respective local model (32), respectively the respective preliminary model (30);
- factorizing an output of the predetermined layer using singular value decomposition to obtain at least one eigen vector;
- computing the corresponding attention map as a projection of the output of the predetermined layer on the first obtained eigenvector.

13. The method according to claim 12, wherein, for each local node (8), each of the respective local model (32), respectively the respective preliminary model (30), is a convolutional neural network.

14. Computer program comprising instructions, which when executed by a computer, cause the computer to carry out the steps of the method according to any one of claims 1 to 13.

15. A framework (2; 102) for performing privacy-preserving federated learning for object detection, the framework (2; 102) comprising:

- N local nodes (8), N being an integer greater than or equal to 2, each local node (8) being configured to:

- store a copy of a preliminary model (30), the preliminary model being a result of training (22) an object detection model based on a central training dataset (12);
- train (24) the respective preliminary model based on a respective private training dataset (14), thereby obtaining a local model (32);

- a node (6; 9) configured to compute (26) an average model (34) as an average of N intermediate models (38), each intermediate model (38) depending on a respective local model (32); and
- a central node (6), distinct from the local nodes (8), and configured to store a central model (36) generated (28) based:

- on the preliminary model (30) and on an average output of the average model (34) based on a predetermined public dataset (10) as input, each intermediate model being the respective local model (32); or
- on the average model (34) and a local output of each local model (32) based on the public dataset (10) as input, each intermediate model (38) being a result of optimizing the preliminary model (30) based on the local output of the respective local model (32).

**Figure 1**

**Figure 2**

**Figure 3**

| | Europäisches Patentamt European Patent Office Office européen des brevets | **EUROPEAN SEARCH REPORT** | Application Number EP 24 30 5097 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SU SHANGCHAO ET AL: "Cross-domain Federated Object Detection", 2023 IEEE INTERNATIONAL CONFERENCE ON MULTIMEDIA AND EXPO (ICME), IEEE, 10 July 2023 (2023-07-10), pages 1469-1474, XP034408294, DOI: 10.1109/ICME55011.2023.00254 [retrieved on 2023-08-25] * figures 1-4 * * algorithm 1 * * sections I-III * | 1-15 | INV. G06N3/098 G06N3/096 G06N3/0464 ADD. G06N3/084 G06N5/045 |
| A | XUAN GONG ET AL: "Federated Learning with Privacy-Preserving Ensemble Attention Distillation", ARXIV.ORG, CORNELL UNIVERSITY LIBRARY, 201 OLIN LIBRARY CORNELL UNIVERSITY ITHACA, NY 14853, 16 October 2022 (2022-10-16), XP091345566, * figures 1-3 * * sections I-IV * | 4,5,10, 11 | |
| A | Bany Mohammed ET AL: "Eigen-CAM: Class Activation Map using Principal Components", , 1 August 2020 (2020-08-01), XP093172083, Retrieved from the Internet: URL:https://arxiv.org/pdf/2008.00299 * equations 1-3 * * sections I-IV * | 4,6,10, 12 | TECHNICAL FIELDS SEARCHED (IPC) G06N |

The present search report has been drawn up for all claims

| Place of search | Date of completion of the search | Examiner |
|---|---|---|
| The Hague | 11 June 2024 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)